# EUROPEAN PATENT APPLICATION

(11) **EP 4 603 210 A1**
(43) Date of publication of application: **20.08.2025**
(21) Application number: 23877216.4
(22) Date of filing: 04.10.2023
(51) Int. Cl.: B22D 17/20, B22D 17/30, B29C 45/18

(54) **INJECTION MOLDING MACHINE HOPPER, INJECTION DEVICE, AND INJECTION MOLDING MACHINE**

(30) Priority: 11.10.2022 JP 2022163142
(71) Applicant: The Japan Steel Works, Ltd., Tokyo 141-0032 (JP)
(72) Inventor: BUTANI Michio, Tokyo 141-0032 (JP)
(74) Representative: Simmons & Simmons LLP (Munich)
(86) International application number: PCT/JP2023/036290
(87) International publication number: WO 2024/080211

(57) **Abstract**

An injection molding machine hopper (21) comprises a hopper body (31) and a connection structure (32) that connects a heating cylinder (15) and the hopper body (31). The connection structure (32) has: a base (38) having a through hole (44) in communication with the heating cylinder (15); and a connection pipe (39) connecting the base (38) and the hopper body (31). The connection pipe (39) can be separated from the base (38) by moving relative to the hopper body (31).

## Description

### TECHNICAL FIELD

The present invention relates to a hopper provided in a heating cylinder of an injection molding machine, an injection device provided with the hopper, and an injection molding machine.

### BACKGROUND ART

As described in, for example, Patent Literature 1, an injection device of an injection molding machine includes a heating cylinder, a screw placed in the heating cylinder, and a screw driving device that drives the screw. The heating cylinder is supported by a predetermined member (for example, a part of the screw driving device) in a horizontal position. A hopper is attached to an upstream end portion of the heating cylinder, and an injection material is supplied from the hopper to the heating cylinder. An injection nozzle is attached to a downstream end portion of the heating cylinder.

### CITATION LIST

### PATENT LITERATURE

Patent Literature 1: JP2004-506997A

### SUMMARY OF INVENTION

### TECHNICAL PROBLEM

When performing maintenance on the heating cylinder of the injection device, the heating cylinder is detached from a predetermined member supporting the heating cylinder while the heating cylinder is suspended by a crane or the like. However, as described above, the hopper is attached to the heating cylinder the hopper, which may interfere with the detachment process. Therefore, when detaching the heating cylinder, it is preferable to detach the hopper from the heating cylinder in advance. In order to detach the hopper from the heating cylinder, the connection between the hopper and the heating cylinder is released, and then the hopper is suspended by the crane and carried out to the outside. After the maintenance is completed, the heating cylinder is attached to the predetermined member again, and the hopper is attached to the heating cylinder again. Such detachment and attachment of the hopper is a factor that makes it difficult to improve workability of maintenance work of the heating cylinder.

The present disclosure provides a hopper for an injection molding machine that allows easy maintenance of a heating cylinder.

Other problems and novel features will become apparent from description of the present description and the accompanying drawings.

### SOLUTION TO PROBLEM

In the present disclosure, a hopper for an injection molding machine includes: a hopper body provided on a heating cylinder support member that supports a heating cylinder of an injection device, the hoppy body being configured to move horizontally; and a connection structure connecting the heating cylinder and the hopper body. The connection structure includes a base provided on the heating cylinder and having a through hole communicating with a material supply hole of the heating cylinder, and a connection pipe connecting the base and the hopper body. The connection pipe is movable (for example, slidable) relative to the hopper body and configured to be separated from the base by moving relative to the hopper body.

### ADVANTAGEOUS EFFECTS OF INVENTION

In the hopper for an injection molding machine according to the present disclosure, maintenance of the heating cylinder can be easily performed.

### BRIEF DESCRIPTION OF DRAWINGS

[FIG. 1] FIG. 1 is a front view of a metal injection molding machine according to a first embodiment.
[FIG. 2] FIG. 2 is a perspective view illustrating a part of an injection device including a hopper according to the first embodiment.
[FIG. 3] FIG. 3 is a front cross-sectional view illustrating the part of the injection device including the hopper according to the first embodiment.
[FIG. 4] FIG. 4 is a perspective view illustrating a part of the hopper according to the first embodiment.
[FIG. 5] FIG. 5 is a perspective view illustrating a part of the injection device including the hopper according to the first embodiment.
[FIG. 6] FIG. 6 is a front cross-sectional view illustrating the part of the injection device including the hopper according to a modification of the first embodiment.
[FIG. 7A] FIG. 7A is a perspective view illustrating a part of an injection device including a hopper according to a second embodiment.
[FIG. 7B] FIG. 7B is a perspective view illustrating the part of the injection device including the hopper according to the second embodiment.

### DESCRIPTION OF EMBODIMENTS

Hereinafter, specific embodiments will be described in detail with reference to the drawings. The present disclosure is not limited to the following embodiments. In order to clarify the description, the following description and the drawings are simplified as appropriate. In the drawings, the same elements are denoted by the same reference numerals, and repeated description thereof is omitted as necessary. In addition, hatching may be omitted to avoid complicating the drawings.

### [First Embodiment]

### <Metal Injection Molding Machine>

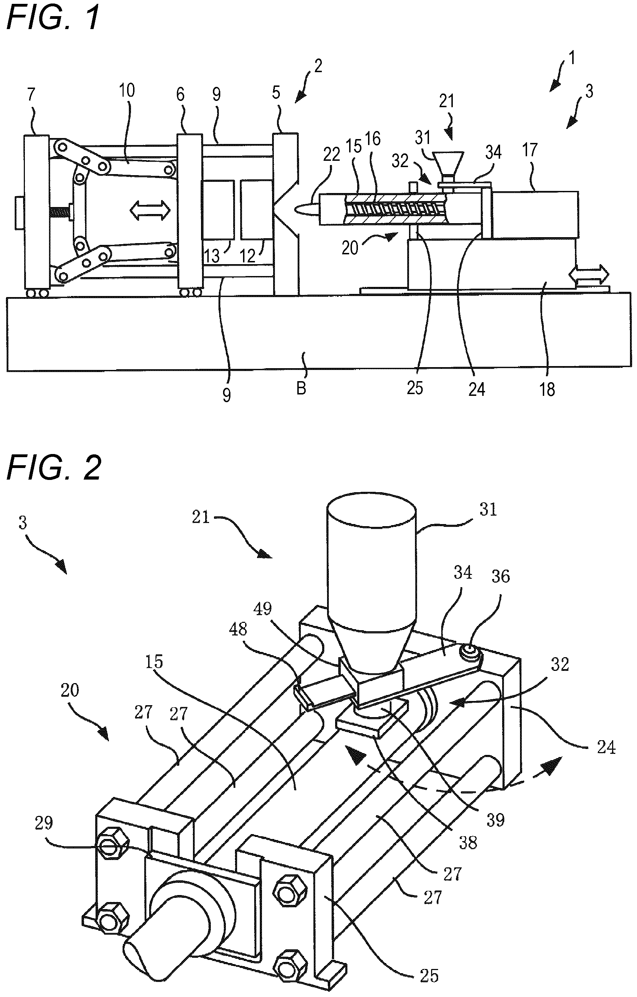

An injection molding machine 1 according to a first embodiment will be described. The injection molding machine 1 is also referred to as a metal injection molding machine 1 because metal is used as an injection material. As illustrated in FIG. 1, the metal injection molding machine 1 includes a mold clamping device 2 provided on a bed B, and an injection device 3 slidably provided on the bed B.

### <Mold Clamping Device>

The mold clamping device 2 includes a fixed platen 5 fixed to the bed B, a movable platen 6 slidably provided on the bed B, and a mold clamping housing 7 also slidably provided on the bed B. The fixed platen 5 and the mold clamping housing 7 are coupled by tie bars 9, 9, ..., and the movable platen 6 is penetrated by the tie bars 9, 9, ... A mold clamping mechanism is provided between the mold clamping housing 6 and the movable platen 7. Although a mold clamping cylinder may be used as the mold clamping mechanism, a toggle mechanism 10 is used in the first embodiment. The fixed platen 5 is provided with a fixed mold 12, and the movable platen 6 is provided with a movable mold 13. In the mold clamping device 2, when the toggle mechanism 10 is driven, the fixed mold 12 and the movable mold 13 are opened and closed.

### <Injection Device>

In the first embodiment, the injection device 3 is a metal injection device that melts and injects metal as an injection material. The injection device 3 includes a heating cylinder 15, a screw 16 inserted in the heating cylinder 15 so as to be drivable in a rotation direction and an axial direction, and a screw driving device 17 that drives the screw 16. The bed B is provided with a support base 18 which is slidable. The support base 18 is provided with a heating cylinder support structure 20 that supports the heating cylinder 15 described below, and the screw driving device 17. Therefore, the injection device 3 as a whole moves toward and away from the mold clamping device 2. The heating cylinder 15 is provided with an injection nozzle 22 and a hopper 21 according to the first embodiment to be described later in detail.

### <Heating Cylinder Support Structure>

As illustrated in FIG. 2, the heating cylinder support structure 20 includes a support plate 24 that supports the heating cylinder 15 at a rear end portion, and a flange plate 25 that supports the heating cylinder 15 at the center. The support plate 24 and the flange plate 25 are coupled by four rods 27, 27, ... A joint plate 29 is provided at a central portion of the heating cylinder 15, and the joint plate 29 is fixed to the flange plate 25.

### <Hopper>

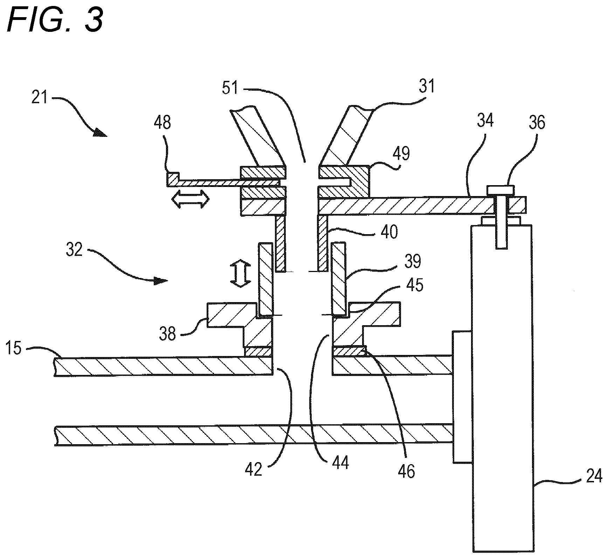

As illustrated in FIGS. 2 and 3, the hopper 21 according to the first embodiment includes a hopper body 31 and a connection structure 32 that connects the hopper body 31 and the heating cylinder 15. The hopper body 31 is provided via a rotating plate 34 on the support plate 24 (that is, a heating cylinder support member) supporting the heating cylinder 15. The rotating plate 34 is connected to the support plate 24 by a pin 36 and is horizontally rotatable. Therefore, the hopper body 31 can also be moved so as to rotate horizontally together with the rotating plate 34.

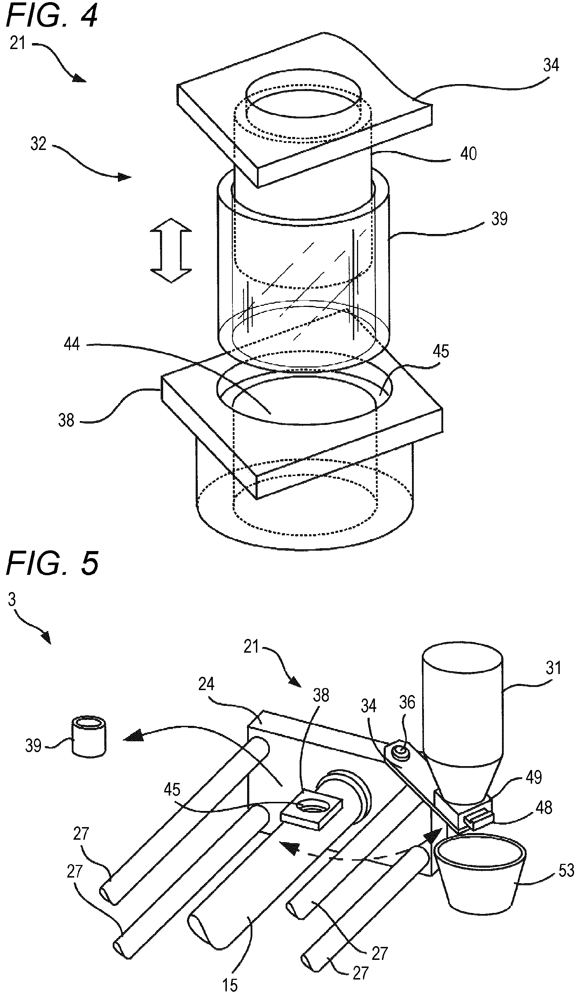

As illustrated in FIG. 3, the connection structure 32 includes a base 38 provided on the heating cylinder 15, a connection pipe 39, and a cylindrical portion 40 provided on a member (that is, the rotating plate 34) located closer to the hopper body 31 than the connection pipe 39. A through hole 44 is formed in the base 38. The through hole 44 communicates with a material supply hole 42 which is formed in the heating cylinder 15 and used to supply an injection material. As illustrated in FIG. 4, an inner wall surface of the through hole 44 has an annular step portion 45 formed in a stepped shape above the through hole 44 (that is, in the vicinity of the opening) by increasing a diameter of the through hole 44. An inner diameter of the annular step portion 45 is slightly larger than an outer diameter of the connection pipe 39 which will be described below. Thus, the connection pipe 39 is smoothly inserted into the annular step portion 45. In the first embodiment, the base 38 is connected to the heating cylinder 15 via a heat insulating material 46. Therefore, heat conduction from the heating cylinder 15 to the base 38 is reduced.

The connection pipe 39 is formed in a cylindrical shape in this embodiment. The connection pipe 39 is loosely fitted into the cylindrical portion 40 provided on the rotating plate 34 and is slidable in a vertical direction. That is, an outer diameter of the cylindrical portion 40 is slightly smaller than an inner diameter of the connection pipe 39. A lower end portion of the connection pipe 39 is inserted into the annular step portion 45 of the base 38. When the lower end portion of the connection pipe 39 is inserted into the annular step portion 45, the cylindrical portion 40 and the base 38 are connected by the connection pipe 39. In the first embodiment, the connection pipe 39 is formed of a transparent resin (for example, polycarbonate). Therefore, the injection material being fed from the hopper body 31 (see FIGS. 2 and 3) to the heating cylinder 15 via the connection pipe 39 can be visually observed. As described above, a temperature rise of the base 38 is reduced by the effect of the heat insulating material 46. Therefore, deterioration of the resin connection pipe 39 due to heat is prevented.

As illustrated in FIGS. 2 and 3, the hopper 21 according to the first embodiment is provided with a shutter 48 below the hopper body 31. The shutter 48 is movable forward and backward with respect to a housing 49. When the shutter 48 is inserted all the way into the housing 49, a material outlet 51 opening on a lower side of the hopper body 31 is closed. On the other hand, when the shutter 48 is retracted, the material outlet 51 is opened.

### <Operation>

The operation of the hopper 21 according to the first embodiment will be described. First, a state in which the hopper 21 is connected to the heating cylinder 15 as illustrated in FIGS. 2 and 3 will be described. When performing maintenance on the heating cylinder 15 such as replacement of the heating cylinder 15, the hopper body 31 that hinders the maintenance is detached from the heating cylinder 15. First, the shutter 48 is inserted all the way into the housing 49. Then, as described above, the material outlet 51 of the hopper body 31 is closed. In this state, one or several molding cycles are performed. Then, the injection material in the connection pipe 39 is also consumed. Since the connection pipe 39 is transparent, it is possible to easily visually recognize whether any injection material remains. Next, the connection pipe 39 is slid upward in the vertical direction. Then, as illustrated in FIG. 4, the lower end portion of the connection pipe 39 is removed from the annular step portion 45. That is, the connection between the connection pipe 39 and the base 38 is released.

Next, as illustrated in FIG. 5, the hopper body 31 is rotated. The connection pipe 39 is removed from the cylindrical portion 40 (see FIG. 4) during the rotation. That is, as illustrated in FIG. 5, the connection pipe 39 is removed. Then, the connection pipe 39 can be prevented from coming into contact with the rod 27 during the rotation of the hopper body 31. That is, the hopper body 31 can be rotated without interfering with the rod 27. When the removal of the hopper body 31 from the heating cylinder 15 is completed, maintenance on the heating cylinder 15 is performed. As illustrated in FIG. 5, a container 53 is disposed below the hopper body 31 as necessary. When the shutter 48 is opened, the injection material remaining in the hopper body 31 can be transferred to the container 53.

Next, when connecting the hopper body 31 to the heating cylinder 15 after the maintenance on the heating cylinder 15 is completed, the above-described procedure is carried out in reverse. That is, the hopper body 31 is rotated, and the connection pipe 39 is inserted into the cylindrical portion 40 (see FIG. 4) during the rotation. Further, the hopper body 31 is rotated to align the connection pipe 39 with the base 38. When the connection pipe 39 is slid downward along the cylindrical portion 40 in the vertical direction, the lower end portion of the connection pipe 39 is inserted into the annular step portion 45 as illustrated in FIG. 3. That is, the connection between the hopper body 31 and the heating cylinder 15 is completed.

### [Modification to First Embodiment]

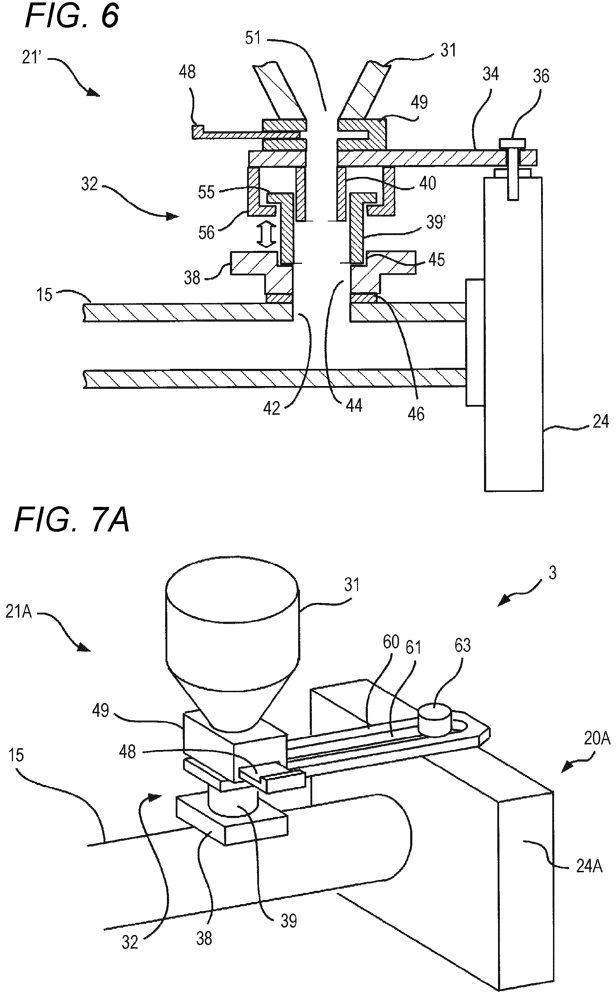

A modification to the first embodiment will be described. In the modification to the first embodiment, only the hopper 21 in the metal injection molding machine 1 (see FIG. 1) according to the first embodiment is modified, and the other configurations are the same as those of the first embodiment. Therefore, the description of the configuration of the metal injection molding machine 1 will be omitted. A hopper 21' according to the modification of the first embodiment is illustrated in FIG. 6. In the hopper 21' according to the modification of the first embodiment, the same members as those in the hopper 21 (see FIG. 3) according to the first embodiment are denoted by the same reference numerals, and detailed description thereof will be omitted.

In the hopper 21' according to the modification of the first embodiment, a connection pipe 39' is modified. That is, a flange portion 55 is formed at an upper end portion of the connection pipe 39'. In the hopper 21' according to the modification of the first embodiment, a stopper 56 is provided on the rotating plate 34. The stopper 56 is configured such that the flange portion 55 of the connection pipe 39' is caught thereon. This allows the connection pipe 39' to slide up and down in the vertical direction, but restricts detachment of the connection pipe 39'. The hopper 21' according to the modification of the first embodiment is also easily detached from the heating cylinder 15.

### [Second Embodiment]

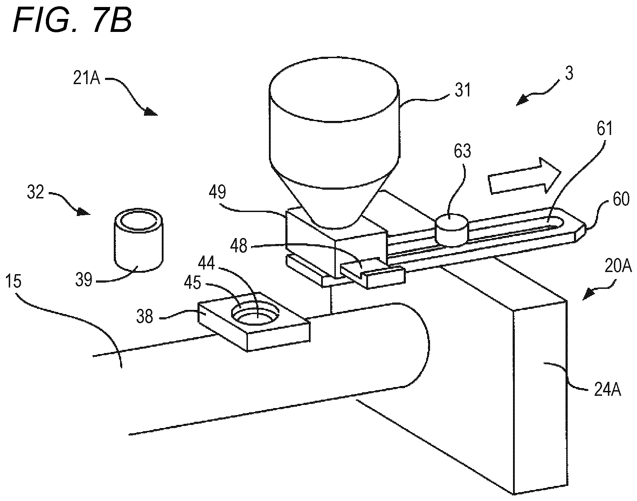

A second embodiment will be described. An injection molding machine according to the second embodiment has the same configuration as the metal injection molding machine 1 according to the first embodiment illustrated in FIG. 1, and differs only in a hopper 21A and a heating cylinder support structure 20A that supports the heating cylinder 15 as illustrated in FIGS. 7A and 7B. Therefore, a detailed description of the injection molding machine will be omitted.

In the second embodiment, the heating cylinder support structure 20A includes a support plate 24A. The heating cylinder 15 is supported by the support plate 24A at the rear end portion.

The hopper 21A according to the second embodiment is partially different from the hopper 21 (see FIGS. 2, 3, and 4) according to the first embodiment. The same members are denoted by the same reference numerals, and description thereof is omitted. In the hopper 21A according to the second embodiment, the hopper body 31 is provided on a slide plate 60. A slit-shaped guide hole 61 is formed in the slide plate 60. A pin 63 is inserted into the guide hole 61, and the slide plate 60 is attached to the support plate 24A by the pin 63. When detaching the hopper 21A according to the second embodiment from the heating cylinder 15, the connection pipe 39 is slid upward and separated from the base 38, similarly to the hopper 21 (see FIG. 5) according to the first embodiment. Next, as illustrated in FIG. 7B, the hopper body 31 is slid horizontally. Further, the connection pipe 39 is detached. In this way, the hopper 21A can be detached from the heating cylinder 15.

### <Other Modifications>

The injection molding machine 1 according to the first embodiment and the second embodiment may be variously modified. For example, the connection pipe 39 (see FIGS. 3 and 4) may be modified. The connection pipe 39 has been described as being cylindrical, but may be, for example, a square tube. Further, a sliding direction of the connection pipe 39 is not limited to the vertical direction. For example, the cylindrical portion 40 may have a shape extending in an oblique direction intersecting the vertical direction so that the connection pipe 39 slides obliquely. Further, the connection pipe 39 may be configured to be movable in a movement form other than sliding. Further, the materials for the members may be changed. That is, acrylic, polyethylene, or AS resin may be used as the material for the connection pipe 39 instead of the transparent polycarbonate. Further, as a material for the connection pipe 39, an opaque resin or other materials may be used. When the base 38 is made of a material that can withstand high temperature, the base 38 (see FIG. 3) may be directly provided in the heating cylinder 15 without the heat insulating material 46.

Other modifications are also possible. For example, the shutter 48 is not essential in the hopper 21, 21', or 21A (see FIGS. 2, 6, and 7A). When removing the hopper 21, 21', or 21A from the heating cylinder 15, as long as no injection material left inside the hopper body 31, the injection material will not scatter to the surroundings even in an absence of the shutter 48.

The injection molding machine 1 according to the first embodiment and the second embodiment is a metal injection molding machine 1 (see FIG. 1) that is configured to melt and inject metal as an injection material. However, the hopper 21, 21', or 21A used in the first and second embodiments may also be adopted in an injection molding machine that is configured to melt and inject resin as an injection material.

Although the invention made by the present inventor has been specifically described above based on the embodiments, it is needless to say that the present invention is not limited to the embodiments described above, and various modifications can be made without departing from the scope of the invention. The plurality of examples described above may be appropriately combined.

Here, the features of the embodiments of the hopper 21, 21', or 21A, the injection device 3, and the injection molding machine 1 described above will be briefly summarized and listed in the following [1] to [21].
[1] A hopper (21, 21', 21A) for an injection molding machine, the hopper including:
   a hopper body (31) provided on a heating cylinder support member (20) that supports a heating cylinder (15) of an injection device (3), the hopper body (31) being configured to move horizontally; and
   a connection structure (32) connecting the heating cylinder (15) and the hopper body (31),
   in which the connection structure (32) includes:
      a base (38) provided on the heating cylinder (15) and having a through hole (44) communicating with a material supply hole (42) of the heating cylinder (15); and
      a connection pipe (39) connecting the base (38) and the hopper body (31), and
   in which the connection pipe (39) is movable relative to the hopper body (31) and configured to be separated from the base (38) by moving relative to the hopper body (31).
[2] In the hopper (21, 21') for an injection molding machine according to [1],
   the hopper body (31) is provided on the heating cylinder support member (20) and is configured to be movable by rotating horizontally.
[3] In the hopper (21A) for an injection molding machine according to [1],
   the hopper body (31) is provided on the heating cylinder support member (20) and is configured to be movable by sliding horizontally.
[4] The hopper (21, 21', 21A) for an injection molding machine according to [1] or [2], further including:
   a shutter (48) provided below the hopper body (31) and configured to open and close a material outlet (51) of the hopper body (31), the material outlet opening downward.
[5] In the hopper (21, 21', 21A) for an injection molding machine according to [1] or [2],
   the connection pipe (39) is movable in a vertical direction relative to the hopper body (31) and is separable from the base (38) by moving upward in the vertical direction.
[6] The hopper (21, 21', 21A) for an injection molding machine according to [1] or [2], further including:
   a cylindrical portion (40) provided below the hopper body (31),
   in which the connection pipe (39) has a cylindrical shape,
   in which an outer diameter of the cylindrical portion (40) is smaller than an inner diameter of the connection pipe (39),
   in which an inner wall surface of the through hole (44) has an annular step portion (45) formed by increasing a diameter of the through hole (44) near an opening of the through hole (44), and
   in which the connection pipe (39) is slidably fitted into the cylindrical portion (40), and when the connection pipe (39) is slid in one direction, an end portion of the connection pipe (39) fits into the annular step portion (45), and when the connection pipe (39) is slid in the other direction, the end portion of the connection pipe (39) separates from the annular step portion (45).
[7] In the hopper (21, 21', 21A) for an injection molding machine according to [1] or [2],
   the connection pipe (39) is formed from a transparent resin material.
[8] The hopper (21, 21', 21A) for an injection molding machine according to [1] or [2], further including:
   a heat insulation member (46) disposed between the base (38) and the heating cylinder (15).
[9] In the hopper (21') for an injection molding machine according to [1] or [2],
   the connection pipe (39) has a flange portion (55) at one end portion of the connection pipe (39),
   the hopper (21) further includes a stopper (56) configured to engage with the flange portion (55), and
   the connection pipe (39) is allowed to move relative to the hopper body (31) and is restricted from being detached from the stopper (56) by engagement between the flange portion (55) and the stopper (56).
[10] An injection device (3) including:
   a heating cylinder (15);
   a screw (16) disposed in the heating cylinder (15); and
   a hopper (21, 21', 21A) configured to supply an injection material into the heating cylinder (15),
   in which the hopper (21, 21', 21A) includes:
      a hopper body (31) provided on a heating cylinder support member (20) that supports the heating cylinder (15), the hopper body (31) being configured to move horizontally; and
      a connection structure (32) connecting the heating cylinder (15) and the hopper body (31),
   in which the connection structure (32) includes a base (38) provided on the heating cylinder (15) and having a through hole (44) communicating with a material supply hole (42) of the heating cylinder (15), and a connection pipe (39) connecting the base (38) and the hopper body (31), and
   in which the connection pipe (39) is movable relative to the hopper body (31) and configured to be separated from the base (38) by moving relative to the hopper body (31).
[11] In the injection device (3) according to [10],
   the hopper body (31) is provided on the heating cylinder support member (20) and is configured to be movable by rotating horizontally.
[12] In the injection device (3) according to [10],
   the hopper body (31) is provided on the heating cylinder support member (20) and is configured to be movable by sliding horizontally.
[13] The injection device (3) according to [10] or [11], further including:
   a shutter (48) provided below the hopper body (31) and configured to open and close a material outlet (51) of the hopper body (31), the material outlet opening downward.
[14] In the injection device (3) according to [10] or [11],
   the connection pipe (39) is movable in a vertical direction relative to the hopper body (31) and is separable from the base (38) by moving upward in the vertical direction.
[15] The injection device (3) according to [10] or [11], further including:
   a cylindrical portion (40) provided below the hopper body (31),
   in which the connection pipe (39) has a cylindrical shape,
   in which an outer diameter of the cylindrical portion (40) is smaller than an inner diameter of the connection pipe (39),
   in which an inner wall surface of the through hole (44) has an annular step portion (45) formed by increasing a diameter of the through hole (44) near an opening of the through hole (44), and
   in which the connection pipe (39) is slidably fitted into the cylindrical portion (40), and when the connection pipe (39) is slid in one direction, an end portion of the connection pipe (39) fits into the annular step portion (45), and when the connection pipe (39) is slid in the other direction, the end portion of the connection pipe (39) separates from the annular step portion (45).
[16] In the injection device (3) according to [10] or [11],
   the connection pipe (39) is formed from a transparent resin material.
[17] The injection device (3) according to [10] or [11], further including:
   a heat insulation member (46) disposed between the base (38) and the heating cylinder (15).
[18] In the injection device (3) according to [10] or [11],
   the connection pipe (39) has a flange portion (55) at one end portion of the connection pipe (39),
   the hopper (21) includes a stopper (56) configured to engage with the flange portion (55), and
   the connection pipe (39) is allowed to move relative to the hopper body (31) and is restricted from being detached from the stopper (56) by engagement between the flange portion (55) and the stopper (56).
[19] In the injection device (3) according to [10] or [11],
   the injection device (3) is a metal injection device (3) that uses metal as an injection material.
[20] An injection molding machine including:
   a mold clamping device (2) configured to clamp a mold; and
   an injection device (3) configured to inject an injection material into the mold,
   in which the injection device (3) includes:
      a heating cylinder (15);
      a screw (16) disposed in the heating cylinder (15); and
      a hopper (21, 21', 21A) configured to supply an injection material into the heating cylinder (15),
   in which the hopper (21, 21', 21A) includes:
      a hopper body (31) provided on a heating cylinder support member (20) that supports the heating cylinder (15), the hopper body (31) being configured to move horizontally; and
      a connection structure (32) connecting the heating cylinder (15) and the hopper body (31),
   in which the connection structure (32) includes:
      a base (38) provided on the heating cylinder (15) and having a through hole (44) communicating with a material supply hole (42) of the heating cylinder (15); and
      a connection pipe (39) connecting the base (38) and the hopper body (31), and
   in which the connection pipe (39) is movable relative to the hopper body (31) and configured to be separated from the base (38) by moving relative to the hopper body (31).
[21] In the injection molding machine according to [20],
   the hopper body (31) is provided on the heating cylinder support member (20) and is configured to be movable by rotating horizontally.

The present application is based on Japanese Patent Application No. 2022-163142 filed on October 11, 2022, and the contents thereof are incorporated herein as reference.

### INDUSTRIAL APPLICABILITY

According to the hopper for an injection molding machine, the injection device, and the injection molding machine of the present invention, maintenance of the heating cylinder can be easily performed. The present invention having this effect may be used, for example, in a metal injection molding machine using a metal as an injection material.

### REFERENCE SIGNS LIST

- 1: Metal injection molding machine
- 2: Mold clamping device
- 3: Injection device
- 5: Fixed platen
- 6: Movable platen
- 7: Mold clamping housing
- 9: Tie bar
- 10: Toggle mechanism
- 12: Fixed mold
- 13: Movable mold
- 15: Heating cylinder
- 16: Screw
- 17: Screw driving device
- 18: Support base
- 20: Heating cylinder support structure (heating cylinder support member)
- 21: Hopper
- 22: Injection nozzle
- 24: Support plate
- 25: Flange plate
- 27: Rod
- 29: Joint plate
- 31: Hopper body
- 32: Connection structure
- 34: Rotating plate
- 36: Pin
- 38: Base
- 39: Connection pipe
- 40: Cylindrical portion
- 42: Material supply hole
- 44: Through hole
- 45: Annular step portion
- 46: Heat insulating material (heat insulation member)
- 48: Shutter
- 49: Housing
- 51: Material outlet
- 53: Container
- 55: Flange portion
- 56: Stopper
- 60: Slide plate
- 61: Guide hole
- 63: Pin

## Claims

1. A hopper for an injection molding machine, the hopper comprising:
a hopper body provided on a heating cylinder support member that supports a heating cylinder of an injection device, the hopper body being configured to move horizontally; and
a connection structure connecting the heating cylinder and the hopper body,
wherein the connection structure includes:
a base provided on the heating cylinder and having a through hole communicating with a material supply hole of the heating cylinder; and
a connection pipe connecting the base and the hopper body, and
wherein the connection pipe is movable relative to the hopper body and is configured to be separated from the base by moving relative to the hopper body.

2. The hopper for an injection molding machine according to claim 1,
wherein the hopper body is provided on the heating cylinder support member and is configured to be movable by rotating horizontally.

3. The hopper for an injection molding machine according to claim 1,
wherein the hopper body is provided on the heating cylinder support member and is configured to be movable by sliding horizontally.

4. The hopper for an injection molding machine according to claim 1 or 2, further comprising:
a shutter provided below the hopper body and configured to open and close a material outlet of the hopper body, the material outlet opening downward.

5. The hopper for an injection molding machine according to claim 1 or 2,
wherein the connection pipe is movable in a vertical direction relative to the hopper body and is separable from the base by moving upward in the vertical direction.

6. The hopper for an injection molding machine according to claim 1 or 2, further comprising:
a cylindrical portion provided below the hopper body,
wherein the connection pipe has a cylindrical shape,
wherein an outer diameter of the cylindrical portion is smaller than an inner diameter of the connection pipe,
wherein an inner wall surface of the through hole has an annular step portion formed by increasing a diameter of the through hole near an opening of the through hole, and
wherein the connection pipe is slidably fitted into the cylindrical portion, and when the connection pipe is slid in one direction, an end portion of the connection pipe fits into the annular step portion, and when the connection pipe is slid in the other direction, the end portion of the connection pipe separates from the annular step portion.

7. The hopper for an injection molding machine according to claim 1 or 2,
wherein the connection pipe is formed from a transparent resin material.

8. The hopper for an injection molding machine according to claim 1 or 2, further comprising:
a heat insulation member disposed between the base and the heating cylinder.

9. The hopper for an injection molding machine according to claim 1 or 2,
wherein the connection pipe has a flange portion at one end portion of the connection pipe,
wherein the hopper further includes a stopper configured to engage with the flange portion, and
wherein the connection pipe is allowed to move relative to the hopper body and is restricted from being detached from the stopper by engagement between the flange portion and the stopper.

10. An injection device comprising:
a heating cylinder;
a screw disposed in the heating cylinder; and
a hopper configured to supply an injection material into the heating cylinder,
wherein the hopper includes:
a hopper body provided on a heating cylinder support member that supports the heating cylinder, the hopper body being configured to move horizontally; and
a connection structure connecting the heating cylinder and the hopper body,
wherein the connection structure includes a base provided on the heating cylinder and having a through hole communicating with a material supply hole of the heating cylinder, and a connection pipe connecting the base and the hopper body, and
wherein the connection pipe is movable relative to the hopper body and configured to be separated from the base by moving relative to the hopper body.

11. The injection device according to claim 10,
wherein the hopper body is provided on the heating cylinder support member and is configured to be movable by rotating horizontally.

12. The injection device according to claim 10,
wherein the hopper body is provided on the heating cylinder support member and is configured to be movable by sliding horizontally.

13. The injection device according to claim 10 or 11, further comprising:
a shutter provided below the hopper body and configured to open and close a material outlet of the hopper body, the material outlet opening downward.

14. The injection device according to claim 10 or 11,
wherein the connection pipe is movable in a vertical direction relative to the hopper body and is separable from the base by moving upward in the vertical direction.

15. The injection device according to claim 10 or 11, further comprising:
a cylindrical portion provided below the hopper body,
wherein the connection pipe has a cylindrical shape,
wherein an outer diameter of the cylindrical portion is smaller than an inner diameter of the connection pipe,
wherein an inner wall surface of the through hole has an annular step portion formed by increasing a diameter of the through hole near an opening of the through hole, and
wherein the connection pipe is slidably fitted into the cylindrical portion, and when the connection pipe is slid in one direction, an end portion of the connection pipe fits into the annular step portion, and when the connection pipe is slid in the other direction, the end portion of the connection pipe separates from the annular step portion.

16. The injection device according to claim 10 or 11,
wherein the connection pipe is formed from a transparent resin material.

17. The injection device according to claim 10 or 11, further comprising:
a heat insulation member disposed between the base and the heating cylinder.

18. The injection device according to claim 10 or 11,
wherein the connection pipe has a flange portion at one end portion of the connection pipe,
wherein the hopper includes a stopper configured to engage with the flange portion, and
wherein the connection pipe is allowed to move relative to the hopper body and is restricted from being detached from the stopper by engagement between the flange portion and the stopper.

19. The injection device according to claim 10 or 11,
wherein the injection device is a metal injection device that uses metal as an injection material.

20. An injection molding machine comprising:
a mold clamping device configured to clamp a mold; and
an injection device configured to inject an injection material into the mold,
wherein the injection device includes:
a heating cylinder;
a screw disposed in the heating cylinder; and
a hopper configured to supply an injection material into the heating cylinder,
wherein the hopper includes:
a hopper body provided on a heating cylinder support member that supports the heating cylinder, the hopper body being configured to move horizontally; and
a connection structure connecting the heating cylinder and the hopper body, wherein the connection structure includes:
a base provided on the heating cylinder and having a through hole communicating with a material supply hole of the heating cylinder; and
a connection pipe connecting the base and the hopper body, and
wherein the connection pipe is movable relative to the hopper body and configured to be separated from the base by moving relative to the hopper body.

21. The injection molding machine according to claim 20,
wherein the hopper body is provided on the heating cylinder support member and is configured to be movable by rotating horizontally.
